(19) Europäisches Patentamt
European Patent Office
Office européen des brevets

(11) **EP 4 235 875 A1**

(12) **EUROPEAN PATENT APPLICATION**

(43) Date of publication:
**30.08.2023   Bulletin 2023/35**

(21) Application number: **23159194.2**

(22) Date of filing: **28.02.2023**

(51) International Patent Classification (IPC):
**H01M 4/70** (2006.01)        **H01M 10/0587** (2010.01)
**H01M 10/04** (2006.01)

(52) Cooperative Patent Classification (CPC):
**H01M 4/70; H01M 10/0431; H01M 10/0587;
H01M 50/528; H01M 50/531**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **28.02.2022   KR 20220026221**

(71) Applicant: **Samsung SDI Co., Ltd.**
**Yongin-si, Gyeonggi-do 17084 (KR)**

(72) Inventors:
• **LEE, Dongmyung**
  **17084 Yongin-si (KR)**
• **HAN, Seunghun**
  **17084 Yongin-si (KR)**

(74) Representative: **Marks & Clerk LLP**
**15 Fetter Lane**
**London EC4A 1BW (GB)**

(54)   **ELECTRODE ASSEMBLY, AND SECONDARY BATTERY COMPRISING ELECTRODE ASSEMBLY**

(57)     An electrode assembly includes a first electrode, a second electrode, and a separator between the first electrode and the second electrode, the first electrode, the separator, and the second electrode being wound in a jelly-roll shape, and a first electrode tab, wherein the first electrode includes a first coated portion coated with a first electrode active material on a first substrate, and a first uncoated portion on the first substrate, on one side of the first coated portion, and free of the first electrode active material, wherein the first electrode tab is on the first uncoated portion of the first electrode, and wherein the first electrode further includes a first buffer portion on an outermost region of the electrode assembly and extendible along at least one of a winding direction of the electrode assembly and an opposite direction thereof.

FIG. 1

**Description**

**BACKGROUND**

**1. Technical Field**

Aspects of the present disclosure are related to an electrode assembly and a secondary battery including the same.

**2. Description of the Related Art**

As various devices are increasingly becoming miniaturized and are attaining higher performance, it has become important for lithium batteries to have smaller sizes and higher energy densities. That is, lithium batteries that are small in size while having high capacity have become increasingly important.

In addition, as various wearable devices appear in the market, lithium batteries having reduced sizes have become increasingly important.

To realize a lithium battery suitable for such use, batteries having improved stability as well as high loading capacity are being studied.

In a smaller battery with high loading capacity, the structural stability (e.g., structural integrity) of the battery may decrease due to volume changes of electrode assemblies.

In this context, there is a need for a lithium battery having high capacity, reduced size, and improved structural stability (e.g., structural integrity).

The above information disclosed in this Background section is only for enhancement of understanding of the invention, and therefore it may contain information that does not form the prior art that is already known to a person of ordinary skill in the art.

**SUMMARY**

Some aspects of the present disclosure are directed toward an electrode assembly having improved structural stability (e.g., structural integrity) by including a buffer layer at the outermost of the electrode assembly.

Some aspects of the present disclosure are directed toward a secondary battery including the electrode assembly.

Additional aspects will be set forth in part in the description which follows and, in part, will be apparent from the description, or may be learned by practice of the presented embodiments of the disclosure.

According to some embodiments of the present disclosure, there is provided an electrode assembly including: a first electrode, a second electrode, and a separator between the first electrode and the second electrode, the first electrode, the separator, and the second electrode being wound in a jelly-roll shape; and a first electrode tab, wherein the first electrode includes a first coated portion coated with a first electrode active material on a first substrate, and a first uncoated portion on the first substrate, on one side of the first coated portion, and free of the first electrode active material, wherein the first electrode tab is on the first uncoated portion of the first electrode, and wherein the first electrode further includes a first buffer portion on an outermost region of the electrode assembly and extendible along at least one of a winding direction of the electrode assembly and an opposite direction thereof.

In some embodiments, the first buffer portion is in the first uncoated portion.

In some embodiments, the first buffer portion includes a plurality of bent portions and at least one of the plurality of bent portions is bent in an opposite direction to the winding direction of the electrode assembly.

In some embodiments, the first buffer portion includes a first bent portion bent in an opposite direction to the winding direction of the electrode assembly, and a second bent portion bent in the winding direction of the electrode assembly.

In some embodiments, each of the first bent portion and the second bent portion has a radius of curvature of 100 $\mu$m or less.

In some embodiments, a width of the first buffer portion is a distance between both terminal ends of the plurality of bent portions of the first buffer portion, and the width of the first buffer portion is about 1 % to about 40 % relative to an outermost circumference of the electrode assembly.

In some embodiments, the first buffer portion has a width of 5 mm or less.

In some embodiments, the first buffer portion has a Z shape or an S shape.

In some embodiments, the first buffer portion has an embossed structure.

In some embodiments, the first buffer portion is between the first electrode tab and the first coated portion.

In some embodiments, the first electrode tab is adjacent to a terminal end portion of the first uncoated portion, and the first electrode tab is extending in a direction different from a winding direction of the first electrode.

In some embodiments, the first electrode tab extends in a direction perpendicular to the winding direction of the first electrode.

In some embodiments, the first electrode tab does not have a buffer portion extended in at least one of a direction in which the first electrode tab is extended, or an opposite direction thereof.

In some embodiments, a terminal end of the first uncoated portion is exposed on an outermost portion of the electrode assembly.

In some embodiments, a ratio (D1/H1) of an outside diameter (D1) to a height (H1) of the electrode assembly is about 1 to about 25.

In some embodiments, the first electrode includes a winding start portion, and a second buffer portion at the winding start portion and extendable along at least one of the winding direction of the electrode assembly and an opposite direction thereof.

In some embodiments, the first electrode further includes a second uncoated portion on the first substrate, on an other side of the first coated portion, and free of the first electrode active material, and the second uncoated portion includes the second buffer portion.

According to some embodiments of the present disclosure, there is provided a secondary battery including: the above-described electrode assembly; a battery case including an inner space and accommodating the electrode assembly and an electrolyte in the inner space; and a cap assembly joined to an upper portion of the battery case and sealing the battery case.

In some embodiments, the electrode assembly includes an electrode tab, and the electrode tab is fixed to the battery case or the cap assembly.

In some embodiments, the secondary battery is a coin cell, a cylindrical cell, or a rectangular cell. At least some of the above and other features of the invention are set out in the claims.

## BRIEF DESCRIPTION OF THE DRAWINGS

The above and other aspects and features of certain embodiments of the disclosure will be more apparent from the following description taken in conjunction with the accompanying drawings, in which:

FIG. 1 is an exploded perspective view of an electrode assembly before being wound according to some embodiments of the present disclosure;

FIG. 2 is a cross-sectional view showing only a first electrode included in a wound electrode assembly according to some embodiments of the present disclosure;

FIG. 3 is a perspective view of a first electrode having an embossed structure according to some embodiments of the present disclosure;

FIG. 4 is a perspective view of a first electrode including a third buffer portion, according to some embodiments of the present disclosure;

FIG. 5 is a perspective view of a second electrode including a second buffer portion, according to some embodiments of the present disclosure;

FIG. 6 is a perspective view of a conventional first electrode that does not include a buffer portion, according to some embodiments of the present disclosure;

FIG. 7 is a partial plan view of a first electrode including a first protective tape attached to a first electrode tab according to some embodiments of the present disclosure;

FIG. 8 is a partial plan view of a second electrode including a second protective tape attached to a second electrode tab according to some embodiments of the present disclosure;

FIG. 9 is a perspective view of an electrode assembly for a coin cell secondary battery according to some embodiments of the present disclosure;

FIG. 10 represents a cross-section of a coin cell secondary battery according to some embodiments of the present disclosure;

FIG. 11 shows an X-ray image of a cross-section of a coin cell secondary battery prepared in Example 1 after charging;

FIG. 12 is a partial enlarged view of FIG. 11;

FIG. 13 is a perspective view of a cylindrical cell secondary battery according to some embodiments of the present disclosure;

FIG. 14 is an exploded perspective view of a cylindrical cell secondary battery according to some embodiments of the present disclosure; and

FIG. 15 represents a cross-section of a cylindrical cell secondary battery according to some embodiments of the present disclosure.

## DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present. Further, the phrase "directly disposed" or "directly on" may mean that there is no layer, film, region, plate or the like between a portion of a layer, film, region, plate or the like and another portion. For example, "directly disposed" or "directly on" may mean that one or more adhesive members are not disposed between two layers or two members.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein. Hereinafter, an electrode assembly and a lithium secondary battery including the same according to some exemplary embodiments will be described in greater detail.

According to some embodiments, the electrode assembly may include a first electrode, a second electrode, and a separator between the first electrode and the second electrode, and have a structure in which the first electrode, the second electrode, and the separator are wound in a jelly-roll form.

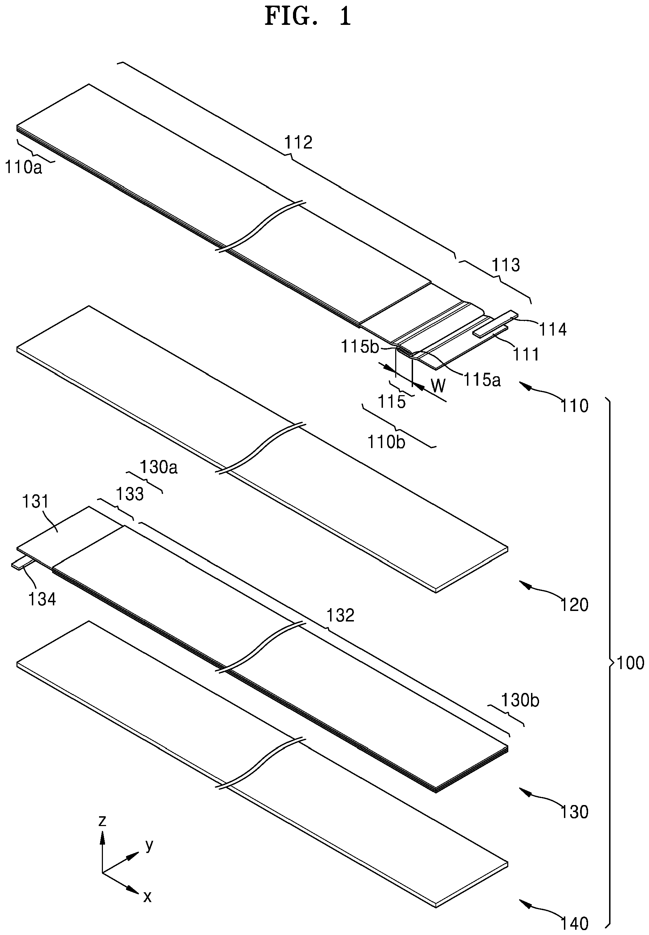

Referring to FIGS. 1 to 15, an electrode assembly 100 may have a structure in which a first electrode 110, a separator 120, a second electrode 130, and a separator 140 are, as shown in FIG. 1, sequentially stacked along a vertical direction and wound in a jelly-roll form from a winding start point (e.g., the left end in FIG. 1) to a winding end point (e.g., the right end in FIG. 1).

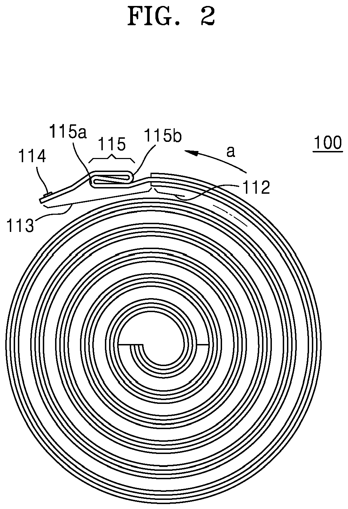

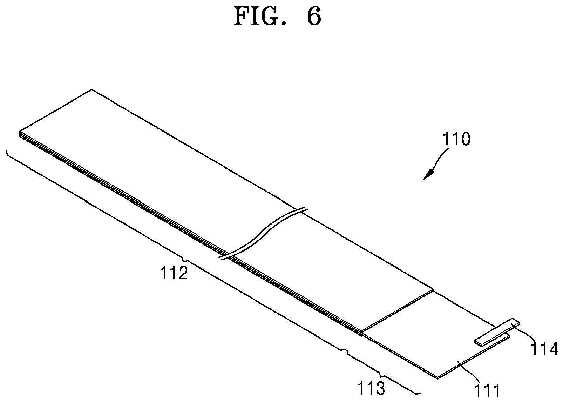

FIG. 1 is an exploded perspective view of an electrode assembly before being wound according to some embodiments of the present disclosure. FIG. 2 is a cross-sectional view showing only a first electrode included in a wound electrode assembly according to some embodiments of the present disclosure. FIG. 6 is a perspective view of a conventional first electrode free of a buffer portion, according to some embodiments of the present disclosure.

In FIG. 2, the separator 120, the second electrode 130, and the separator 140 are sequentially disposed radially toward the winding center of the electrode assembly 100 wound adjacent to the first electrode 110, but are omitted for convenience of description.

The first electrode 110 includes a first coated portion 112 coated with a first electrode active material on a first substrate 111, and a first uncoated portion 113 disposed on the first substrate 111 on one side of the first coated portion 112 and free of a first electrode active material (i.e., without the first electrode active material).

The first electrode 110 may be disposed at the outermost portion of the wound electrode assembly 100. By having the first electrode 110 at the outermost portion of the electrode assembly 100, the first uncoated portion 113 included in the first electrode may face, for example, a battery case and may be in contact with the battery case.

The first electrode 110 may include a first winding start portion 110a that is disposed at a winding start point, and a first winding end portion 110b that is disposed at a winding end point. The first winding end portion 110b may correspond to, for example, the first uncoated portion 113.

The second electrode 130 may include a second coated portion 132 coated with a second electrode active material on a second substrate 131 and a second uncoated portion 133 disposed on the second substrate 131 on one side of the second coated portion 132 and free of a second electrode active material (i.e., without the second electrode active material).

The second electrode 130 may include a second winding start portion 130a that is disposed at a winding start point, and a second winding end portion 130b that is disposed at a winding end point. The first winding start portion 130a may correspond to, for example, the second uncoated portion 133.

The first electrode 110 includes a first buffer portion 115 which is disposed at an outermost part of the electrode assembly 100 and extendible along at least one of a winding direction (e.g., a circumferential direction) of the electrode assembly 100 (e.g., direction x in FIG. 1, direction a in FIG. 2) and an opposite direction thereof.

As the first electrode 110 includes the first buffer portion 115 which is extendible along at least one of a winding direction (e.g., a circumferential direction) of the electrode assembly 100 and an opposite direction thereof, deformations and/or movement of the first electrode 110 caused by volume changes of the electrode assembly 100 during charging/discharging of the secondary battery may be effectively absorbed or mitigated. The first buffer portion 115 may absorb or mitigate expansion and/or shrinkage of the first electrode 110 caused by volume changes of the electrode assembly 100 during charging/discharging of the secondary battery. For example, a first winding end portion 110b of the first electrode 110 may be fixed to the battery case or the cap assembly through a first electrode tab 114. Therefore, when deformations and/or movement of the first electrode 110 due to volume changes of the electrode assembly 100 increase during charging/discharging of the secondary battery, stress generated between the first electrode tab 114 and the first electrode 110 or between the first electrode tab 114 and the battery case increases, causing degradations such as cracks, in the first electrode tab 114. By including the first buffer portion 115 in the first electrode 110, it is possible to prevent degradations from occurring or substantially reduce instances thereof in the first electrode tab 114 by alleviating stress generated between the first electrode tab 114 and the first electrode 110 or between the first electrode tab 114 and the battery case. In addition, by including the first buffer portion 115 in the first electrode 110, the impact applied to the first substrate 111 from thickness increases of the first electrode 110 during charging/discharging of the lithium battery may be substantially reduced (e.g., minimized) and cracks may be effectively avoided or substantially reduced.

As shown in FIG. 6, in an electrode assembly 100 of the related art that is provided with a first electrode 110 not including the first buffer portion, increases in stress generated between the first electrode tab 114 and the first electrode 110 or between the first electrode tab 114 and the battery case, which may result from volume changes of the first electrode 110 during charging/discharging of the secondary battery, may not be suppressed. As a result, degradations such as cracks may easily occur between the first electrode tab 114 and the first electrode 110 or between the first electrode tab 114 and the battery case. In particular, as the size of the first electrode tab used in compact-size secondary batteries decreases, degradations of the first electrode tab 114 caused by volume changes of the battery case 200 may become more prominent.

The first buffer portion 115 may be, for example, disposed on and/or in the first uncoated portion 113. For example, at least a portion of the first uncoated portion 113 may form the first buffer portion 115.

In some embodiments, as the first buffer portion 115 may be disposed on and/or in the first uncoated portion 113, deformations and/or movement of the first electrode 110 caused by volume changes of the electrode assembly 100 during charging/discharging of the secondary battery may be effectively absorbed or mitigated. For example, increases in stress generated between the first electrode tab 114 and the first electrode 110 or between the first electrode tab 114 and the battery case, resulting from expansion and/or movement of the first electrode 110, may be more effectively mitigated. As a result, defects such as cracks in the first electrode tab 114 may be avoided or substantially reduced.

The first buffer portion 115 may include, for example, a plurality of bent (e.g., folded) portions. The number of bent portions included in the first buffer portion 115 may be, for example, 2, 4, 6, 8, 10, or more; however, embodiments of the present disclosure are not limited thereto and the number of bent portions may be selected according to a desired structure of a secondary battery. The number of bent portions included in the first buffer portion 115 may be, for example, 2 to 100, 2 to 50, or 2 to 10.

The first buffer portion 115 may include a plurality of bent (e.g., folded) portions, and one or more of the plurality of bent portions may be bent in an opposite direction from a winding direction (e.g., a circumferential direction) of the electrode assembly 100. By having one or more of the plurality of bent portions bent in an opposite direction from the winding direction of the electrode assembly, a buffer portion capable of relieving migration of the first electrode 110 due to volume changes of the electrode assembly 100 may be further secured. As the number of bent portions bent in an opposite direction of a winding direction of the electrode assembly 100 increases, the buffer portion capable of relieving migration of the first electrode 110 due to volume changes of the electrode assembly 100 may be further increased. Accordingly, by including the first buffer portion 115 in the first electrode 110, the size of buffer portion may be significantly increased without causing a substantial change to the volume of the electrode assembly 100.

Each of the plurality of bent portions may be bent (e.g., folded), for example, about 30 degrees to about 180 degrees, about 45 degrees to about 180 degrees, about 60 degrees to about 180 degrees, about 75 degrees to about 180 degrees, about 90 degrees to about 180 degrees, about 105 degrees to about 180 degrees, about 120 degrees to about 180 degrees, or about 150 degrees to about 180 degrees. Each of the plurality of bent portions may be bent 180 degrees, for example. As the plurality of bent portions may be bent at such angles, volume expansions of the first buffer portion 115 may be significantly reduced (e.g., minimized). In addition, because the plurality of bent portions are bent at such angles, deformation and/or movement of the first electrode 110 caused by volume changes of the electrode assembly 100 during charging/discharging of the secondary battery may be effectively absorbed or mitigated.

The radius of curvature of a bent portion may be, for example, 100 $\mu$m or less, 50 $\mu$m or less, 20 $\mu$m or less, 10 $\mu$m or less, or 1 $\mu$m or less. The radius of curvature of a bent portion may be, for example, 0 (e.g. 0 nm) or more, 1 nm or more, 10 nm or more, or 100 nm or more.

The radius of curvature of a bent portion may be, for example, about 0 (e.g. 0 nm) to about 100 $\mu$m, about 1 nm to about 100 $\mu$m, about 10 nm to about 50 $\mu$m, about 100 nm to about 20 $\mu$m, about 100 nm to about 10 $\mu$m, or about 100 nm to about 1 $\mu$m.

As the plurality of bent portions have such radii of curvature, deformation and/or movement of the first electrode 110 caused by volume changes of the electrode assembly 100 during charging/discharging of the secondary battery may be more effectively absorbed or mitigated.

When the radius of curvature of the bent portion is excessively large, energy density of the electrode assembly 100 may decrease due to volume expansions of the first buffer portion 115.

The first buffer portion 115 may include, for example, a first bent portion 115a bent in an opposite direction from a winding direction (e.g., a circumferential direction) of the electrode assembly, and a second bent portion 115b bent in the winding direction of the electrode assembly.

In some examples, the first buffer portion 115 may further include, in addition to the first bent portion and the second bent portion, a third bent portion bent in an opposite direction to the winding direction of the electrode assembly, a fourth bent portion bent in the winding direction of the electrode assembly, a fifth bent portion bent in an opposite direction from the winding direction of the electrode assembly, a sixth bent portion bent in the winding direction of the electrode assembly, and the like.

Width (W) of the first buffer portion 115 may be, for example, a maximum distance between both terminal ends of a plurality of bent (e.g., folded) portions included in the first buffer portion 115. For example, the width (W) of the first buffer portion 115 may be a maximum distance between one terminal end of the first bent portion 115a and one terminal end of the second bent portion 115b.

When the width (W) of the first buffer portion 115 increases, deformation and/or movement of the first electrode 110 caused by volume changes of the electrode assembly 100 during charging/discharging of the secondary battery may be more effectively absorbed or mitigated.

The width of the first buffer portion 115 may be, for example, 40% or less, 30% or less, 20% or less, 10% or less, or 5% or less of an outermost circumference of the electrode assembly 100.

The width of the first buffer portion 115 may be, for example, about 1 % to about 40%, about 1% to about 30%, about 1% to about 20%, about 1% to about 10%, or about 1 % to about 5% of an outermost circumference of the electrode assembly 100.

The width of the first buffer portion 115 may be, for example, 10 mm or less, 5 mm or less, 4 mm or less, 3 mm or less, or 1 mm or less.

The width of the first buffer portion 115 may be, for example, about 0.1 mm to about 10 mm, about 0.1 mm to about 5 mm, about 0.1 mm to about 4 mm, about 0.1 mm to about 3 mm, or about 0.1 mm to about 1 mm.

If the width of the first buffer portion 115 is too small, it may be difficult to effectively absorb or mitigate movement of the first electrode 110 due to expansion and/or shrinkage of the electrode assembly 100 during charging/discharging of the secondary battery. Conversely, if the width of the first buffer portion 115 is too large, the area of the first coated portion coated with the first electrode active material on the first substrate decreases, and thus, energy density of the electrode assembly 100 including the first electrode may be reduced.

The first buffer portion 115 may have a Z-shape or an S-shape, for example. When the first buffer portion 115 may have such a shape, deformation and/or movement of the first electrode 110 caused by volume changes of the electrode assembly 100 during charging/discharging of the secondary battery may be more effectively absorbed or mitigated.

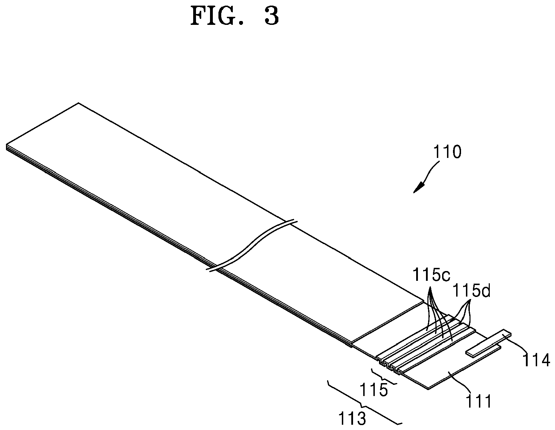

FIG. 3 is a perspective view of a first electrode having an embossed structure according to some embodiments of the present disclosure.

Referring to FIG. 3, the first buffer portion 115 may have an embossed structure for example. The embossed structure may include at least one protruding portion 115c and at least one recessed portion 115d and may have any suitable structure that is extendible along at least one of a winding direction (e.g., a circumferential direction) of an electrode assembly 100 (e.g., direction a in FIG. 2) and an opposite direction thereof.

The embossed structure may have, for example, a structure in which a plurality of protruding portions 115c and a plurality of recessed portions 115d are alternately disposed along a winding direction of the electrode assembly 100. As shown in FIG. 3, the embossed structure may have a striped pattern. The embossed structure may have, for example, a structure in which a plurality of protruding portions 115c and a plurality of recessed portions 115d are disposed along a winding direction of the electrode assembly 100 and along the winding axial direction (i.e., a direction perpendicular to the winding direction) at the same time. The embossed structure may have, for example, a striped pattern including a plurality of protruding portions 115c and a plurality of recessed portions 115d. A width of the first buffer portion 115 may be, for example, a maximum distance between a start point and an end point of a plurality of protruding portions 115c and a plurality of recessed portions 115d that are included in the first buffer portion 115 and arranged along a winding direction of the electrode assembly 100.

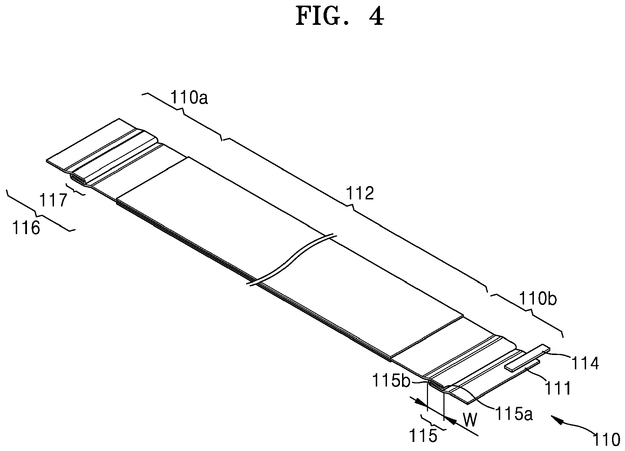

FIG. 4 is a perspective view of a first electrode 110 including a third buffer portion 117.

The first electrode 110 may further include the third buffer portion 117, which is disposed at a first winding start portion 110a and is extendable along at least one of a winding direction (e.g., direction a in FIG. 2 ) of the electrode assembly 100, and an opposite direction thereof.

As the first electrode 110 further includes the third buffer portion 117, volume changes of the electrode assembly 100 during charging/discharging of the secondary battery may be more effectively absorbed or mitigated at the winding center of the electrode assembly 100.

By including a plurality of bent (e.g., folded) parts in the third buffer portion 117, structural stability (e.g., structural integrity) may be imparted to a first winding start portion 110a or structural stability thereof may be improved (e.g., increased). Accordingly, the third buffer portion 117 may prevent the first winding start portion 110a of the first electrode 110 from being deformed by the second electrode tab 134 of the second electrode 130 or may substantially reduce any such deformation.

The first electrode 110 may further include a third uncoated portion 116, which is disposed on the first substrate 111 on the other side of the first coated portion 112 and free of a first electrode active material member.

The third uncoated portion 116 may correspond to the first winding start portion 110a of the first electrode 110. The third uncoated portion 116 may be disposed at a winding center of the electrode assembly 100.

The third uncoated portion 116 may include a third buffer portion 117. For example, at least a portion of the third uncoated portion 116 may form the third buffer portion 117. The third buffer portion 117 may have a structure included in the first buffer portion 115.

By disposing the third buffer portion 117 on the third uncoated portion 116, volume changes of the electrode assembly 100 during charging/discharging of the secondary battery may be more effectively absorbed or mitigated, and additional heat dissipation effect may be provided to the winding center of the first electrode 110.

Because disposition of the third buffer portion 117 on the third uncoated portion 116 substantially increases the area of the third uncoated portion 116, heat generated at the winding center of the electrode assembly 100 during charging/discharging or short-circuiting of the secondary battery may be more effectively dissipated.

By including the third buffer portion 117, the first electrode 110 can provide improved heat dissipation effect, due to an increase in heat dissipating area, without the use of a separate heat dissipation member. Accordingly, temperature increase of the electrode assembly 100 may be suppressed or substantially reduced.

The third uncoated portion 116 may not include a first electrode tab 114.

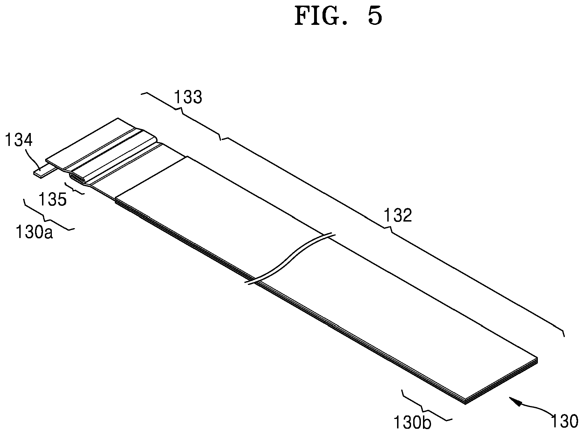

FIG. 5 is a perspective view of a second electrode 130 including a second buffer portion 135, according to some embodiments of the present disclosure.

The second electrode 130 may include a second uncoated portion 133, and the second uncoated portion 133 may further include a second buffer portion 135 which is extendable along at least one of a winding direction (e.g., direction a in FIG. 2) of the electrode assembly 100, and an opposite direction thereof.

By including the second buffer portion 135 in the second electrode 130, volume changes of the electrode assembly 100 during charging/discharging of the secondary battery may be more effectively absorbed or mitigated at the winding center of the electrode assembly 100.

The second buffer portion 135 may have a structure included in the first buffer portion 115.

By including a plurality of bent (e.g., folded) parts in the second buffer portion 135, structural stability (e.g., structural integrity) may be imparted to a second winding start portion 130a or structural stability thereof may be improved (e.g., increased).

A second buffer portion 135 may be, for example, disposed between a second electrode tab 134 and a second coated portion 132. By having the second buffer portion 135 between the second electrode tab 134 and the second coated portion 132, deformations and/or movement of the second electrode 130 due to volume changes of the electrode assembly 100 during charging/discharging of the secondary battery may be more effectively absorbed or mitigated. The second buffer portion 135 may be disposed adjacent to the second electrode tab 134. As the second buffer portion 135 is disposed closer to the second electrode tab 134 than to the second coated portion 132, deformations and/or movement of the second electrode 130 due to volume changes of the electrode assembly 100 during charging/discharging of the secondary battery may be more effectively absorbed or mitigated.

Because disposition of the second buffer portion 135 on the second uncoated portion 133 substantially increases the area of the second uncoated portion 133, heat generated at the winding center of the electrode assembly 100 during charging/discharging or short-circuiting of the secondary battery may be more effectively dissipated.

By including the second buffer portion 135, the second electrode 130 can provide improved heat dissipation effect, due to an increase in heat dissipating area, without the use of a separate heat dissipation member. Accordingly, temperature increase of the electrode assembly 100 may be suppressed or substantially reduced.

The electrode assembly 100 includes a first electrode tab 114 disposed on the first uncoated portion 113 of the first electrode 110. The first electrode tab 114 may be, for example, attached to a battery case or a cap assembly. The first electrode 110 may be fixed to a battery case or a cap assembly via the first electrode tab 114. The first electrode tab 114 may be disposed on at least one side of the first uncoated portion 113 or the other side facing the one side.

The electrode assembly 100 may include a second electrode tab 134 disposed on a second uncoated portion 133 of a second electrode 130. In addition, the second electrode tab 134 may be, for example, attached to a battery case or a cap assembly. Thus, the first electrode 110 may be fixed to the battery case or the cap assembly via the second electrode tab 134. The second electrode tab 134 may be disposed on at least one side of the first uncoated portion 113/133 and the other side facing the one side.

The first electrode 110 may be, for example, a positive electrode, and the second electrode 130 may be, for example, a negative electrode. The first electrode tab 114 may be, for example, a positive electrode tab, and the second electrode tab 134 may be, for example, a negative electrode tab.

The first electrode tab 114 may be, for example, disposed adjacent to a terminal end of the first uncoated portion 113. As the first electrode tab 114 is disposed adjacent to a terminal end of the first uncoated portion 113, a width (W) of a buffer portion 115 included in the first uncoated portion 113 may be relatively increased.

The first electrode tab 114 may be, for example, disposed extending in a different direction than a winding direction (e.g., direction a in FIG. 2) of the first electrode 110. The first electrode tab 114 may be, for example, disposed extending in a direction that forms an angle of about 10 degrees to about 90 degrees, about 30 degrees to about 90 degrees, about 45 degrees to about 90 degrees, or about 60 degrees to about 90 degrees, with respect to the winding direction of the first electrode 110. For example, the first electrode tab 114 may be disposed extending in a direction perpendicular to the winding direction of the first electrode 110. In some examples, the first electrode tab 114 may be disposed extending in a winding axis direction of the first electrode 110. The first electrode tab 114 may be disposed in a direction toward a lower end of a battery case, an upper end of a battery case, or a cap assembly.

A first buffer portion 115 may be, for example, disposed between the first electrode tab 114 and a first coated portion 112. As the first buffer portion 115 may be disposed between the first electrode tab 114 and the first coated portion 112, deformations and/or migration of the first electrode 110 due to volume changes of the electrode assembly 100 during charging/discharging of the secondary battery may be more effectively absorbed or mitigated. The first buffer portion 115 may be disposed adjacent to the first electrode tab 114. As the first buffer portion 115 may be disposed closer to the first electrode tab 114 than to the first coated portion 112, deformations and/or migration of the first electrode 110 due to volume changes of the battery case 200 during charging/discharging of the secondary battery may be more effectively absorbed or mitigated.

The first electrode tab 114 may not include a buffer portion. The first electrode tab 114 may not include a buffer portion extending along at least a direction in which the first electrode tab 114 is extended or an opposite direction thereof.

As the first electrode tab 114 may have, for example, a simple flat sheet shape without buffer portions, the manufacturing process of the first electrode tab 114 and the electrode assembly 100 may be simplified.

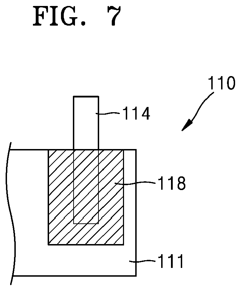

FIG. 7 is a partial plan view of a first electrode 110 including a first protective tape 118 attached to a first electrode tab 114 according to some embodiments of the present disclosure.

A first protective tape 118 may be attached to the first electrode tab. The first protection tape 118 may protect the separators 120 and 140 from being damaged by the first electrode tab 114.

The first protective tape 118 may prevent the second winding end portion 130b of the second electrode 130 from being deformed by the first electrode tab 114 or may substantially reduce any such deformation, and prevent the first electrode tab 114 and the second electrode 130 from being in contact with each other or may substantially reduce occurrence of such contact. Accordingly, stability of the electrode assembly 100 may be improved (e.g., increased).

The first protective tape 118 may include, for example, a material having insulating properties. The first protective tape 118 may be, for example, an insulating tape.

The first protective tape 118 may include, for example, a material that has heat dissipation properties. That is, the electrode assembly 100 generates high heat during charging/discharging or when a short-circuit occurs, and this high heat may cause the electrode assembly 100 to explode or combust. To prevent or substantially reduce such occurrences, the first protective tape 118 may be provided in a material having heat dissipation properties. Accordingly, heat generated on the outside of the electrode assembly 100 may be rapidly dissipated to the outside via the first protective tape 118. Accordingly, temperature increase of the electrode assembly 100 may be suppressed or substantially reduced. Additionally, explosion or combustion of the electrode assembly 100 may be prevented or the likelihood of such occurrences may be substantially reduced.

The first protective tape 118 may be attached while being separated from the first buffer portion 115. When the first protective tape 118 is attached to the first buffer portion 115, the first buffer portion 115 may be immobilized by the first protective tape 118, thus failing to provide a buffer effect.

A terminal end of the first uncoated portion 113 may be exposed on an outermost portion of the electrode assembly 100. A terminal end of the first uncoated portion 113 may be, for example, facing the battery case and may be in contact with the battery case. A terminal end of the first uncoated portion 113 may not be disposed so as to bend toward the inside of the electrode assembly 100.

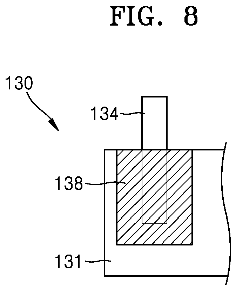

FIG. 8 is a partial plan view of a second electrode 130 including a second protective tape 138 attached to a second electrode tab 134 according to some embodiments of the present disclosure.

The second electrode 130 may include the second electrode tab 134, and the second protective tape 138 may be attached to the second electrode tab 134. The second protective tape 138 may protect separators 120 and 140 from getting damaged by the second electrode tab 134.

The second protective tape 138 can prevent the first winding start part 110a of the first electrode 110 from being deformed by the second electrode tab 134 or may substantially reduce any such deformation, and prevent the second electrode tab 134 and the first electrode 110 from being in contact with each other or may substantially reduce any such contact. Accordingly, stability of the electrode assembly 100 may be improved (e.g., increased). The second protective tape 138 may be provided, for example, in the same material and size as the first protective tape 118. The second protective tape 138 may be, for example, an insulating tape. The second protective tape 138 may be, for example, a heat dissipation tape.

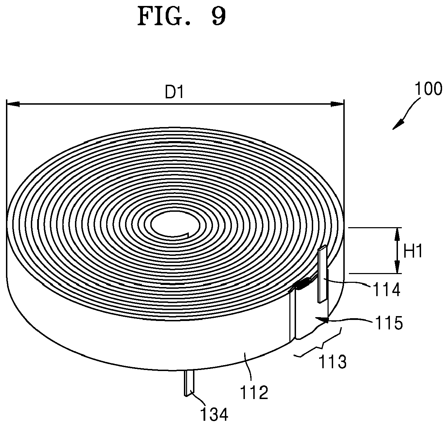

FIG. 9 is a perspective view of an electrode assembly for a coin cell secondary battery according to some embodiments of the present disclosure.

To be applicable to the electrode assembly manufacturing process of manufacturing an electrode assembly 100 by winding a first electrode 110, separators 120 and 140, and a second electrode 130, a winding axial height H1 of the electrode assembly may be about 2 mm or more.

The winding axial height H1 of the electrode assembly 100 may be, for example, 2 mm or more, 4 mm or more, 6 mm or more, or 10 mm or more.

The winding axial height H1 of the electrode assembly 100 may be, for example, about 2 mm to about 20 mm, about 4 mm to about 20 mm, about 6 mm to about 20 mm, or about 10 mm to about 20 mm.

Given the size of an electronic device that includes a secondary battery, in some examples, an outside diameter D1 of the electrode assembly 100 may be 50 mm or less, 40 mm or less, 30 mm or less, or 20 mm or less.

In some examples, the outside diameter D1 of the electrode assembly 100 may be about 20 mm to about 50 mm, about 20 mm to about 40 mm, or about 20 mm to about 30 mm.

A ratio D1/H1 of the outside diameter D1 and height H1 of the electrode assembly may be 25 or less. The ratio D1/H1 of outside diameter D1 and height H1 of the electrode assembly may be, for example, about 1 to about 25, about 1 to about 23, about 1 to about 20, about 1 to about 15, or about 1 to about 10.

If the ratio D1/H1 of the electrode assembly is less than 1, it is difficult to regard it as a coin-type secondary battery, and it may be not suitable for a coin-type secondary battery for wearable devices for which ones desires to have a small size and high capacity secondary battery.

If the ratio D1/H1 of the electrode assembly exceeds 25, it may be outside the allowable range of common coin-type secondary battery design.

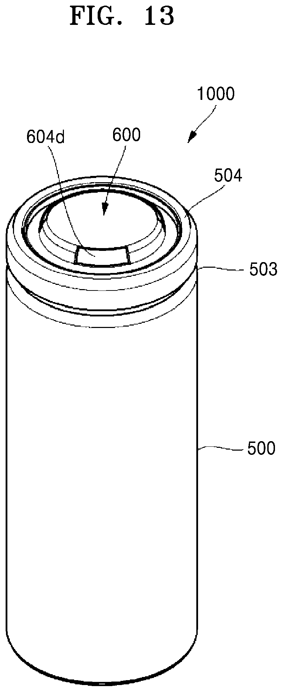

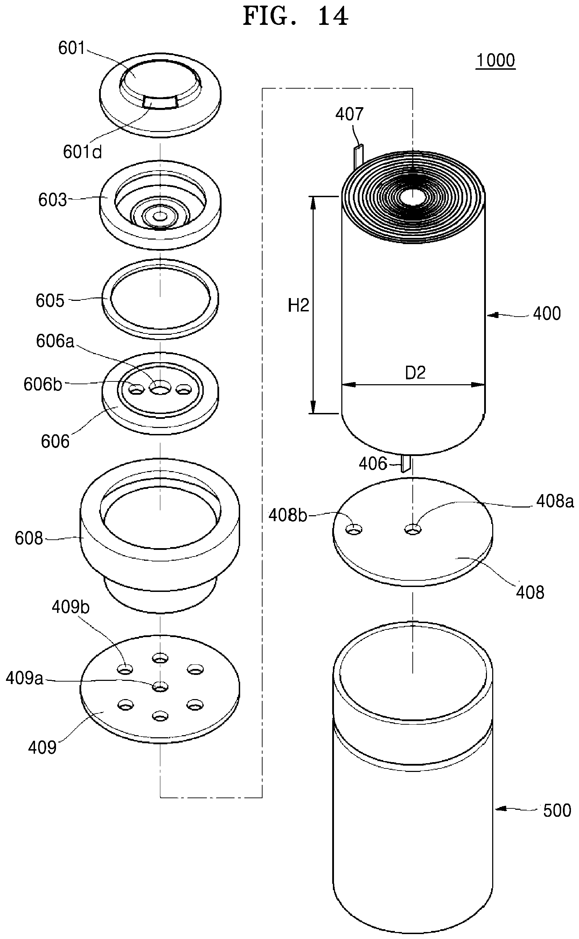

FIG. 14 is an exploded perspective view of a cylindrical secondary battery according to some embodiments of the present disclosure. FIG. 13 includes a perspective view of an electrode assembly for a cylindrical cell secondary battery according to some embodiments.

An electrode assembly 400 may be prepared by winding a first electrode 110, separators 120 and 140, and a second electrode 130.

A winding axial height H2 of the electrode assembly 400 may be, for example, 20 mm or more, 40 mm or more, 60 mm or more, or 80 mm or more.

The winding axial height H2 of the electrode assembly 400 may be, for example, about 20 mm to about 100 mm, about 40 mm to about 100 mm, about 60 mm to about 100 mm, or about 80 mm to about 100 mm.

Given the size of an electronic device that includes a secondary battery, an outside diameter D2 of the electrode assembly 400 may be 40 mm or less, 30 mm or less, 20 mm or less, or 15 mm or less.

The outside diameter D2 of the electrode assembly 400 may be about 5 mm to about 40 mm, about 5 mm to about 30 mm, or about 5 mm to about 20 mm.

A ratio D2/H2 the electrode assembly may be 1 or less. The ratio D2/H2 of the electrode assembly may be, for example, about 0.1 to about 1, about 0.1 to about 0.7, about 0.1 to about 0.5, or about 0.1 to about 0.4.

If the ratio D2/H2 of the electrode assembly exceeds 1, it may be difficult to regard it as a cylindrical secondary battery.

If the ratio D2/H2 of outside diameter D2 and H2 of the electrode assembly is less than 0.1, it may be outside the allowable range of common cylindrical secondary battery design.

A secondary battery according to another embodiment includes the above-described electrode assembly; a battery case having an internal space and accommodating the electrode assembly and an electrolyte in the internal space; and a cap assembly coupled to an upper portion of the battery case to seal the battery case.

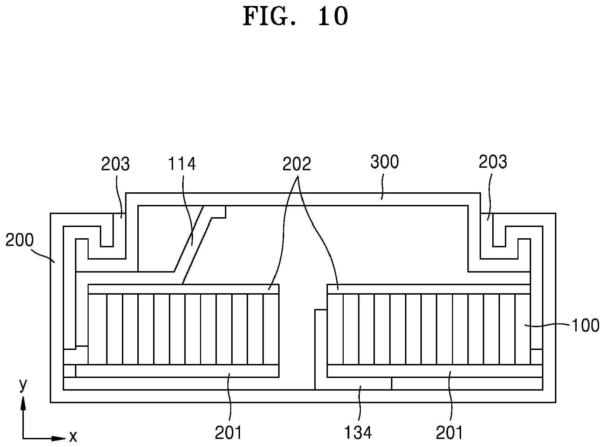

Referring to FIGS. 10 to 15, the secondary battery 1000 may include an electrode assembly 100/400; a battery case 200/500 having an internal space and accommodating the electrode assembly 100/400 and an electrolyte in the internal space; and a cap assembly 300/600 joined to the upper portion of the battery case 200/500 to seal the battery case 200/500. The electrode assembly 100 may include an electrode tab 114/134, and the electrode tab 114/134 may be affixed to the battery case 200/500 or the cap assembly 300/600. The electrode assembly 400 may include electrode tabs 406/407, and the electrode tabs 406/407 may be affixed to the battery case 500 or the cap assembly 600.

A first electrode may be a positive electrode, for example.

The positive electrode may be prepared by a method described below; however, the method of preparation is not necessarily limited thereto and can be suitably adjusted according to desired conditions.

First, a positive electrode active material composition may be prepared by mixing a positive electrode active material, which is a first electrode active material, and a conductive material, a binder, and a solvent. The prepared positive electrode active material composition may be coated and dried on a part of a current collector (e.g., an aluminum current collector), which is a first substrate, to thereby form a positive electrode plate.

In some embodiments, the positive electrode active material composition may be cast on a separate support, and a film exfoliated from the support may be laminated on a current collector (e.g., an aluminum current collector) to thereby form a positive electrode plate.

The positive electrode plate may include a positive active material coated portion (e.g., a positive electrode active material layer) coated with a positive electrode active material on a current collector (e.g., an aluminum current collector), and a first uncoated portion 113 which is free of the positive electrode active material (i.e., without the positive electrode active material) on the current collector and disposed on one side of the positive active material coated portion.

The positive electrode active material may be a lithium-containing metal oxide, and may utilize any lithium-containing metal oxides commonly used in the related art without limitations. Examples of the positive electrode active material include one or more selected from composite oxides of lithium with a metal selected from among cobalt, manganese, nickel, and a combination thereof. The positive electrode active material may include at least one selected from the group consisting of lithium cobalt oxide, lithium nickel cobalt manganese oxide, lithium nickel cobalt aluminum oxide, lithium iron phosphate, and lithium manganese oxide. However, the positive electrode active material is not strictly limited to the aforementioned components and may be any positive electrode active material that is used as a positive electrode active material of a lithium battery in the related art.

For example, the positive electrode active material may be a compound represented by any one of the following chemical formulas: $Li_aA_{1-b}B'_bD_2$ (in the formula, $0.90 \le a \le 1.8$ and $0 \le b \le 0.5$); $Li_aE_{1-b}B'_bO_{2-c}D_c$ (in the formula, $0.90 \le a \le 1.8$, $0 \le b \le 0.5$, $0 \le c \le 0.05$); $LiE_{2-b}B'_bO_{4-c}D_c$ (in the formula, $0 \le b \le 0.5$, $0 \le c \le 0.05$); $Li_aNi_{1-b-c}Co_bB'_cD_\alpha$ (in the formula, $0.90 \le a \le 1.8$, $0 \le b \le 0.5$, $0 \le c \le 0.05$, $0 < \alpha \le 2$); $Li_aNi_{1-b-c}Co_bB'_cO_{2-\alpha}F_\alpha$ (in the formula, $0.90 \le a \le 1.8$, $0 \le b \le 0.5$, $0 \le c \le 0.05$, $0 < \alpha < 2$); $Li_aNi_{1-b-c}Co_bB'_cO_{2-\alpha}F'_2$ (in the formula, $0.90 \le a \le 1.8$, $0 \le b \le 0.5$, $0 \le c \le 0.05$, $0 < \alpha < 2$); $Li_aNi_{1-b-c}Mn_bB'_cD_\alpha$ (in the formula, $0.90 \le a \le 1.8$, $0 \le b \le 0.5$, $0 \le c \le 0.05$, $0 < \alpha \le 2$); $Li_aNi_{1-b-c}Mn_bB'_cO_{2-\alpha}F'_\alpha$ (in the formula, $0.90 \le a \le 1.8$, $0 \le b \le 0.5$, $0 \le c \le 0.05$, $0 < \alpha < 2$); $Li_aNi_{1-b-c}Mn_bB'_cO_{2-\alpha}F'_2$ (in the formula, $0.90 \le a \le 1.8$, $0 \le b \le 0.5$, $0 \le c \le 0.05$, $0 < \alpha < 2$); $Li_aNi_bE_cG_dO_2$ (in the formula, $0.90 \le a \le 1.8$, $0 \le b \le 0.9$, $0 \le c \le 0.5$, $0.001 \le d \le 0.1$); $Li_aNi_bCo_cMn_dG_eO_2$ (in the formula, $0.90 \le a \le 1.8$, $0 \le b \le 0.9$, $0 \le c \le 0.5$, $0 \le d \le 0.5$, $0.001 \le e \le 0.1$); $Li_aNiG_bO_2$ (in the formula, $0.90 \le a \le 1.8$, $0.001 \le b \le 0.1$); $Li_aCoG_bO_2$ (in the formula, $0.90 \le a \le 1.8$, $0.001 \le b \le 0.1$); $Li_aMnG_bO_2$ (in the formula, $0.90 \le a \le 1.8$, $0.001 \le b \le 0.1$); $Li_aMn_2G_bO_4$ (in the formula, $0.90 \le a \le 1.8$, $0.001 \le b \le 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3 (0 \le f \le 2)$; $Li_{(3-f)}Fe_2(PO_4)_3 (0 \le f \le 2)$; and $LiFePO_4$.

In the above-described formulas, A is Ni, Co, Mn, or a combination thereof; B' is Al, Ni, Co, Mn, Cr, Fe, Mg, Sr, V, an rare-earth element, or a combination thereof; D is O, F, S, P, a combination thereof; E is Co, Mn, a combination thereof; F' is F, S, P, a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof.

A compound having a coating layer added on a surface of the above-described compound may also be used, and a mixture of the above compound and a compound having a coating layer added thereon may also be used. The coating layer added on the surface of the above-described compound may include, for example, compounds of a coating element, such as oxides and hydroxides of the coating element, oxyhydroxides of the coating element, oxycarbonates of the coating element, and hydroxycarbonates of the coating element. Compounds forming the above coating layer may be amorphous or crystalline. The coating element included in the coating layer may be Mg, Al, Co, K, Na, Ca, Si, Ti, V, Sn, Ge, Ga, B, As, Zr, or a mixture thereof. The method by which the coating layer is formed, may be selected from among methods that do not adversely affect the physical properties of a positive electrode active material. Examples of the coating method may include spray coating, dip coating, and the like. Specific coating methods are well-understood by those of ordinary skill in the related art, and as such will not be further described in detail.

For example, the positive electrode active material may utilize $LiNiO_2$, $LiCoO_2$, $LiMn_xO_{2x}$ (x=1, 2), $LiNi_{1-x}Mn_xO_2$ ($0<x<1$), $LiNi_{1-x-y}Co_xMn_yO_2$ ($0 \le x \le 0.5$, $0 \le y \le 0.5$), $LiFeO_2$, $V_2O_5$, $TiS$, $MoS$, and the like.

Examples of the positive electrode active material may include $Li_aNi_xCo_yM_zO_{2-b}A_b$ ($1.0 \le a \le 1.2$, $0 \le b \le 0.2$, $0.8 \le x < 1$, $0 \le y \le 0.3$, $0 < z \le 0.3$, x+y+z=1, M is at least one selected from the group consisting of manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al) and boron (B); and A is F, S, Cl, Br, or a combination thereof); $LiNi_xCo_yMn_zO_2$ ($0.8 \le x \le 0.95$, $0 < y \le 0.2$, $0 < z \le 0.2$ and x+y+z=1), $LiNi_xCo_yAl_zO_2$ ($0.8 \le x \le 0.95$, $0 < y \le 0.2$, $0 \le z \le 0.2$, and x+y+z=1), $LiNi_xCo_yAl_vMn_wO_2$ ($0.8 \le x \le 0.95$, $0 \le y \le 0.2$, $0 < v \le 0.2$, $0 < w \le 0.2$, and x+y+v+w=1), $Li_aNi_xMn_yM'_zO_{2-b}A_b$ ($1.0 \le a \le 1.2$, $0 \le b \le 0.2$, $0 < x \le 0.3$, $0.5 \le y < 1$, $0 < z \le 0.3$, and x+y+z=1; and M' is cobalt (Co), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B) or a combination thereof; and A is F, S, Cl, Br or a combination thereof).

The positive electrode active material composition may utilize the same conductive material, binder and solvent as used in the negative electrode active material composition. Also, a plasticizer may be further added to the positive electrode active material composition and/or negative electrode active material composition to form pores within the electrode plate.

The respective amounts of the positive electrode active material, the conductive material, the binder, and the solvent are at a level commonly used in lithium batteries. One or more of the conductive material, the binder, and the solvent may be absent depending on the use and composition of a lithium battery.

The amount of the binder included in the positive electrode may be, for example, about 0.1 wt% to about 10 wt%, or about 0.1 wt% to about 5 wt% with respect to the total weight of the positive electrode active material layer. The amount of the conductive material included in the positive electrode may be, for example, about 0.1 wt% to about 10 wt%, or about 0.1 wt% to about 5 wt% with respect to the total weight of the positive electrode active material layer. The amount of the positive electrode active material included in the positive electrode may be, for example, about 70 wt% to about 99 wt%, about 90 wt% to about 99 wt%, or about 95 wt% to about 99 wt% with respect to the total weight of the positive electrode active material layer.

A buffer portion may be formed in the first uncoated portion 113 of a positive electrode plate. The buffer portion may be prepared by, for example, bending the first uncoated portion 113, which is a current collector (e.g., an aluminum current collector), in at least one of a winding direction (e.g., a circumferential direction) of the electrode assembly and an opposite direction thereof. In some examples, the buffer portion may form an embossed structure by having bumps introduced into the first uncoated portion 113, which is an aluminum current collector. The embossed structure can be introduced, for example, by rolling in a rolling mill that has bumps having a certain shape formed on the surface thereof.

A positive electrode tab may be formed at terminal end portions of the positive electrode plate. The positive electrode tab may be introduced, for example, by welding. The positive electrode tab may be affixed to a battery case or a cap assembly.

A second electrode may be a negative electrode, for example.

The negative electrode may be prepared by a method described below; however, the method of preparation is not necessarily limited thereto and can be suitably adjusted according to desired conditions.

First, a negative electrode active material composition may be prepared by mixing a composite negative electrode active material, which is a second electrode active material, and a conductive material, a binder, and a solvent. The prepared negative electrode active material composition may be coated and dried on a part of a current collector (e.g., a copper current collector), which is a second substrate, to thereby form a positive electrode plate.

In some examples, the negative electrode active material composition may be cast on a separate support, and a film exfoliated from the support may be laminated on a current collector (e.g., a copper current collector) to thereby form a negative electrode plate with a negative electrode active material layer formed thereon.

The negative electrode plate may include a negative active material coated portion (e.g., a negative electrode active material layer) coated with a negative electrode active material on a current collector (e.g., a copper current collector), and a second uncoated portion which is free of the negative electrode active material (i.e., without the negative electrode active material) on the current collector and disposed on one side of the negative active material coated portion.

For example, the negative electrode active material includes one or more selected from the group consisting of lithium metal, a metal alloyable with lithium, a transition metal oxide, a non-transition metal oxide, and a carbonaceous material; however, the negative electrode active material is not limited thereto and may be any suitable material that is used as a negative electrode active material in lithium batteries in the related art. Examples of the metal alloyable with lithium may include Si, Sn, Al, Ge, Pb, Bi, Sb, a Si-X alloy (wherein X is an alkali metal, an alkaline earth metal, an element of Group 13, an element of Group 14, a transition metal, a rare earth metal, or a combination thereof, but not Si), a Sn-X alloy (wherein X is an alkali metal, an alkaline earth metal, an element of Group 13, an element of Group 14, a transition metal, a rare earth metal, or a combination thereof, but not Sn) and the like. For example, X may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. The transition metal oxide may be, for example, a lithium titanium oxide, a vanadium oxide, a lithium vanadium oxide, or the like. The non-transition metal oxide may be, for example, $SiOx$ ($0 < x < 2$), $SiO_2$, $SnO_2$, and the like. The carbonaceous material may be, for example, a crystalline carbon, an amorphous carbon, or a mixture thereof. Examples of the crystalline carbon may include graphite, including artificial graphite or natural graphite in shapeless, plate, flake, spherical or fiber form. Examples of the amorphous carbon may include soft carbon (low-temperature calcined carbon) or hard carbon, mesophase pitch carbides, calcined cokes, and the like.

Examples of the conductive material may include: carbon black, graphite powder, natural graphite, artificial graphite, acetylene black, Ketjen black, and carbon fibers; carbon nanotubes; metal powder, metal fibers, or metal tubes, such as copper, nickel, aluminum, silver, etc.; and conductive polymers such as polyphenylene derivatives, and the like; however, the conductive material is not limited to the aforementioned components and may be any suitable material that is used as a conductive material in the related art.

Examples of the binder may include a vinylidene fluoride/hexafluoropropylene copolymer, polyvinylidene fluoride, polyacrylonitrile, polymethylmethacrylate, polytetrafluoroethylene (PTFE), a mixture of the aforementioned polymers, a styrene butadiene rubber-based polymer, polyacrylic acid, lithium-substituted polyacrylic acid, polyamideimide, polyimide, etc.; however, embodiments of the present disclosure are not limited thereto and the binder may include any suitable material that is used in the related art.

Examples of the solvent may include N-methylpyrrolidone (NMP), acetone, water, etc.; however, embodiments of the present disclosure are not limited thereto and the solvent may include any material that is used in the related art.

It is also possible to create pores inside an electrode plate by further adding a plasticizer and a pore forming agent to the negative electrode active material composition.

The contents of the negative electrode active material, the conductive material, the binder, and the solvent used in the negative electrode are at a level commonly used in a lithium battery. Depending on the intended use and composition of a lithium battery, one or more of the conductive material, the binder, and the solvent may be omitted.

The amount of the binder included in the negative electrode may be, for example, about 0.1 wt% to about 10 wt%, or about 0.1 wt% to about 5 wt% with respect to the total weight of the negative electrode active material layer. The amount of the conductive material included in the negative electrode may be, for example, about 0.1 wt% to about 10 wt%, or about 0.1 wt% to about 5 wt% with respect to the total weight of the negative electrode active material layer. The amount of the negative electrode active material included in the negative electrode may be about 0.1 wt% to about 99 wt%, about 0.1 wt% to about 90 wt%, about 0.1 wt% to about 50 wt%, about 0.1 wt% to about 30 wt%, about 0.1 wt% to about 20 wt%, or about 0.1 wt% to about 10 wt%, with respect to the total weight of the negative electrode active material layer.

A negative electrode tab may be formed at a terminal end portion of the negative electrode plate. The negative electrode tab may be introduced, for example, by welding. The negative electrode tab may be affixed to a battery case or a cap assembly.

Next, a separator to be placed between the positive electrode and the negative electrode may be prepared.

The separator may be any separator that is commonly used in lithium batteries. For the separator, for example, any separator capable of retaining a large quantity of electrolyte solution while exhibiting low resistance to ion migration in electrolyte may be used. For example, the separator may include glass fiber, polyester, Teflon, polyethylene, polypropylene, polytetrafluoroethylene (PTFE), or a combination thereof. In addition, the separator may be in the form of nonwoven fabric or woven fabric. A lithium ion battery may include, for example, a rollable separator formed of polyethylene, polypropylene, or the like. A lithium ion polymer battery may include, for example, a separator having an excellent organic liquid electrolyte immersion capability.

The separator may be prepared by a method described below; however, the method of preparation is not necessarily limited thereto and can be suitably adjusted according to desired conditions.

First, a separator composition may be prepared by mixing a polymer resin, a filler, and a solvent. The separator composition may be directly coated and dried on an electrode to form a separator. In some examples, the separator composition may be cast and dried on a support, and a separator film exfoliated from the support may be laminated on top of an electrode, to thereby form the separator.

A polymer used in the preparation of the separator is not particularly limited and may be any suitable polymer that is used in a binder of an electrode plate. For example, a vinylidene fluoride/hexafluoropropylene copolymer, polyvinylidene fluoride (PVDF), polyacrylonitrile, polymethyl methacrylate, or a mixture thereof may be used.

Next, an electrolyte may be prepared.

The electrolyte may be, for example, an organic electrolyte solution. The organic electrolyte solution may be prepared by dissolving a lithium salt in an organic solvent.

The organic solvent may be any material that is used as an organic solvent in the related art. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N, N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and mixtures thereof.

The lithium salt may be any material that can be used as a lithium salt in the related art. For example, the lithium salt may be $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ ($1 \leq x \leq 20$ and $1 \leq y \leq 20$), LiCl, LiI or a mixture thereof.

In some examples, the electrolyte may be a solid electrolyte. Examples of the solid electrolyte may include a boron oxide, a lithium oxynitride, and the like; however, the solid electrolyte is not limited thereto and may be any suitable material that is used as a solid electrolyte in the related art. The solid electrolyte may be formed on the negative electrode by a method such as sputtering, for example, or a separate solid electrolyte sheet may be stacked on the negative electrode.

The solid electrolyte may be, for example, an oxide-based solid electrolyte or a sulfide-based solid electrolyte.

The solid electrolyte may be, for example, an oxide-based solid electrolyte. The oxide-based solid electrolyte may be at least one selected from among $Li_{1+x+y}Al_xTi_{2-x}Si_yP_{3-y}O_{12}$ ($0<x<2$ and $0 \leq y<3$), $BaTiO_3$, $Pb(Zr,Ti)O_3(PZT)$, $Pb_{1-x}La_xZr_{1-y}Ti_yO_3(PLZT)$ ($0 \leq x<1$ and $0 \leq y<1$), $PB(Mg_3Nb_{2/3})O_3-PbTiO_3(PMN-PT)$, $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ ($0<x<2$ and $0<y<3$), $Li_xAl_yTi_z(PO_4)_3$ ($0<x<2$, $0<y<1$, and $0<z<3$), $Li_{1+x+y}(Al, Ga)_x(Ti, Ge)_{2-x}Si_yP_{3-y}O_{12}$ ($0 \leq x \leq 1$ and $0 \leq y \leq 1$), $Li_xLa_yTiO_3$ ($0<x<2$ and $0<y<3$), $Li_2O$, $LiOH$, $Li_2CO_3$, $LiAlO_2$, $Li_2O-Al_2O_3-SiO_2-P_2O_5-TiO_2-GeO_2$, and $Li_{3+x}La_3M_2O_2$ (M = Te, Nb, or Zr, and x is an integer of 1 to 10). The solid electrolyte may be prepared by a sintering method, or the like. For example, the oxide-based solid electrolyte may be a garnet-type solid electrolyte selected from among $Li_7La_3Zr_2O_{12}$ (LLZO) and $Li_{3+x}La_3Zr_{2-a}M_aO_{12}$ (M doped LLZO, M=Ga, W, Nb, Ta, or Al, and x is an integer of 1 to 10).

The sulfide-based solid electrolyte may include, for example, lithium sulfide, silicon sulfide, phosphorus sulfide, boron sulfide, or a combination thereof. Sulfide-based solid electrolyte particles may include $Li_2S$, $P_2S_5$, $SiS_2$, $GeS_2$, $B_2S_3$, or a combination thereof. The sulfide-based solid electrolyte particles may be $Li_2S$ or $P_2S_5$ The sulfide-based solid electrolyte particles are known to have a higher lithium ion conductivity than other inorganic compounds. For example, the sulfide-based solid electrolyte may include $Li_2S$ and $P_2S_5$. If sulfide solid electrolyte materials constituting the sulfide-based solid electrolyte include $Li_2S$-$P_2S_5$, a mixing molar ratio of $Li_2S$ and $P_2S_5$ may be, for example, in a range of about 50:50 to about 90:10. In addition, an inorganic solid electrolyte prepared by adding a material, such as $Li_3PO_4$, a halogen, a halogen compound, $Li_{2+2x}Zn_{1-x}GeO_4$ ("LISICON", $0 \leq x < 1$), $Li_{3+y}PO_{4-x}N_x$("LIPON", $0<x<4$, $0<y<3$), $Li_{3.25}Ge_{0.25}P_{0.75}S_4$ ("Thio-LISICON"), $Li_2O$-$Al_2O_3$-$TiO_2$-$P_2O_5$ ("LATP"), to an inorganic solid electrolyte, such as $Li_2S$-$P_2S_5$, $SiS_2$, $GeS_2$, $B_2S_3$, or a combination thereof, may be used as a sulfide solid electrolyte. Non-limiting examples of the sulfide solid electrolyte material may include $Li_2S$-$P_2S_5$; $Li_2S$-$P_2S_5$-LiX (X=a halogen element); $Li_2S$-$P_2S_5$-$Li_2O$; $Li_2S$-$P_2S_5$-$Li_2O$-Lil; $Li_2S$-$SiS_2$; $Li_2S$-$SiS_2$-Lil; $Li_2S$-$SiS_2$-LiBr; $Li_2S$-$SiS_2$-LiCl; $Li_2S$-$SiS_2$-$B_2S_3$-Lil; $Li_2S$-$SiS_2$-$P_2S_5$-Lil; $Li_2S$-$B_2S_3$; $Li_2S$-$P_2S_5$-$Z_mS_n$ ($0<m<10$, $0<n<10$, Z=Ge, Zn or Ga); $Li_2S$-$GeS_2$; $Li_2S$-$SiS_2$-$Li_3PO_4$- and $Li_2S$-$SiS_2$-$Li_pMO_q$ ($0<p<10$, $0<q<10$, M=P, Si, Ge, B, Al, Ga or In). In this regard, the sulfide-based solid electrolyte material may be prepared by subjecting a starting material (e.g., $Li_2S$, $P_2S_5$, etc.) of the sulfide-based solid electrolyte material to a treatment such as melt quenching, mechanical milling, and the like. Also, a calcination process may be performed following the above treatment. The sulfide-based solid electrolyte may be amorphous or crystalline or may be in a mixed state thereof.

Referring to FIGS. 1, 2, and 9, an electrode assembly 100 may be prepared by having a positive electrode 110, a negative electrode 130, and a separator 120/140 wound into a jelly-roll form.

The first electrode 110 may include a positive electrode tab 114 on a positive electrode uncoated portion 113, and a negative electrode may include a negative electrode tab 134 on a negative electrode uncoated portion 133. The first electrode tab 114 may be disposed on an outer portion of the first uncoated portion 113 disposed on the outermost portion of the electrode assembly 100, and the second electrode tab 134 may be disposed on the inside of the negative electrode uncoated portion 133 disposed in a winding center portion of the electrode assembly 100. In some examples, the first electrode tab 114 may be disposed on the inside of the first uncoated portion 113 disposed on the outermost portion of the electrode assembly 100, and the second electrode tab 134 may be disposed on the outside of the negative electrode uncoated portion 133 disposed in the winding center portion of the electrode assembly 100.

FIG. 10 represents a cross-section of a coin cell secondary battery according to some embodiments of the present disclosure.

Referring to FIG. 10, an electrode assembly 1000 may be accommodated inside a battery case 200. The battery case 200 may be metal. The battery case 200 may be, for example, a metal such as aluminum, and the like.

On the bottom of the battery case 200, a lower insulating plate 201 may be disposed. The lower insulating plate 201 may be made of an insulating polymer, for example. The insulating polymer may be, for example, polyphenylene sulfide.

An upper insulating plate 202 may be disposed on an upper portion of an electrode assembly 100 accommodated inside the battery case 200. The upper insulating plate 202 may be the same material as a lower insulating plate 201. The lower insulating plate 201 and the upper insulating plate 202 may have a pore formed in the center thereof.

A negative electrode tab 134 may be connected to a bottom portion of the battery case 200. The second electrode tab 134 may be, for example, connected to the bottom portion of the battery case 200 by welding. The battery case 200 may be, for example, used as a negative electrode terminal. The negative electrode tab may be, for example, a metal, such as nickel, copper, and the like.

The positive electrode tab 114 may be connected to a back side of the cap assembly 300. The first electrode tab 114 may be, for example, connected to the back side of the cap assembly 300 by welding. The cap assembly 300 may be, for example, used as a positive electrode terminal. The cap assembly may be a metal, such as aluminum and the like, for example. The positive electrode tab may be, for example, a metal such as nickel, copper, and the like.

The battery case 200 and the cap assembly 300 may be, for example, insulated by an insulating packing 203. The insulating packing may be, for example, a polymer material such as polypropylene, polyethylene, and the like. The insulating packing 203 may be, for example, an insulating gasket.

An electrolyte solution may be injected through an injection port, and the injection port may be sealed using a sealing material, to thereby complete a coin-type secondary battery (1000).

FIG. 13 is a perspective view of a cylindrical cell secondary battery 1000 according to some embodiments of the present disclosure.

FIG. 14 is an exploded perspective view of a cylindrical cell secondary battery 1000 according to some embodiments of the present disclosure.

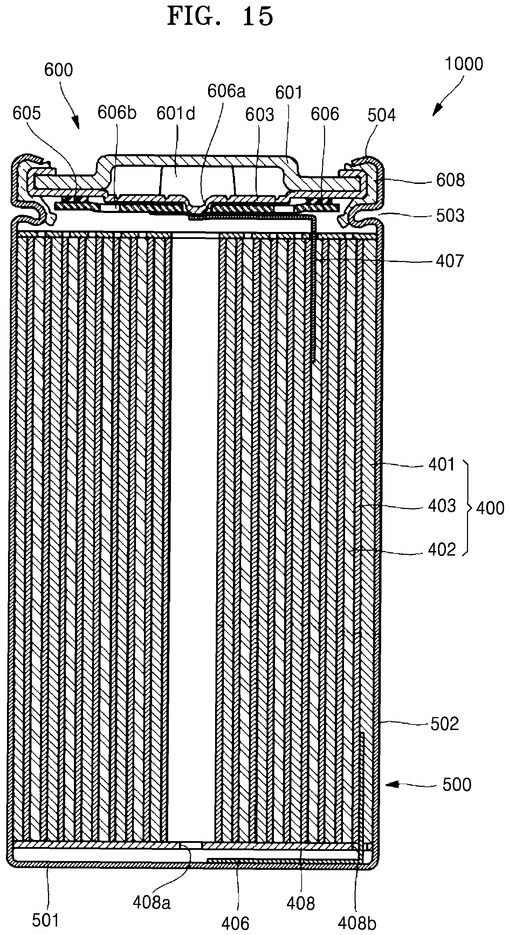

FIG. 15 is a cross-sectional view of a cylindrical cell secondary battery 1000 according to some embodiments of the present disclosure.

The secondary battery 1000 may include a battery case 500, an electrode assembly 400 accommodated in the battery case 500, and a cap assembly 600 sealing an upper opening of the battery case 500.

The battery case 500 may include a circular bottom portion 501 and a side portion 502 extending upward from the bottom portion 501 to a predetermined length.

An upper part of the battery case 500 may be open during an assembly process of the electrode assembly 100.

During an assembly process of the electrode assembly 100, an electrode assembly 400 may be inserted into the battery case 500 along with an electrolyte solution.

The battery case 500 may be formed of steel, a steel alloy, aluminum, an aluminum alloy, or an equivalent thereof; however, the material of the battery case 500 is not limited to the aforementioned materials.

In the battery case 500, around a cap assembly 600 there may be formed an inwardly recessed beading part 503 below and an inwardly bent crimping part 504 thereabove, so as to contain an electrode assembly 400.

The electrode assembly 400 may be accommodated inside a battery case 500 with an electrolyte solution.

The cylindrical secondary battery may be formed by rolling an electrode assembly 400 including a positive electrode 402, a negative electrode 401, and a separator 403 between the positive electrode 402 and the negative electrode 401 into a jelly-roll form.

The negative electrode 401, the positive electrode 402, and the separator 403 may be rolled to have a cylindrical form. In addition, a negative electrode tab 406 downwardly protruding to a certain length may be attached to the negative electrode 401, and a positive electrode tab 407 upwardly protruding to a certain length may be attached to the positive electrode 402, or alternatively, a negative electrode tab 406 upwardly protruding to a certain length may be attached to the negative electrode 401, and a positive electrode tab 407 downwardly protruding to a certain length may be attached to the positive electrode 402. Additionally, the negative electrode tab 406 and the positive electrode tab 407 may be positioned on the same surfaces of the negative electrode 401 and the positive electrode 402, or may be positioned on opposite surfaces of the negative electrode 401 and the positive electrode 402. Here, the same surfaces may refer to surfaces facing the same winding center in the wound electrode assembly 100, or may be surfaces facing the same outermost portion thereof. The negative electrode tab 406 of the electrode assembly 400 may be welded to a bottom portion 501 of the battery case 500. Accordingly, the battery case 500 may act as a negative electrode. In some examples, the positive electrode tab 407 may be welded to the bottom portion 501 of the battery case 500, and in this example, the battery case 500 may act as a positive electrode. In addition, a first insulating plate 408, which is joined to the battery case 500 and has a first hole 408a in the center thereof and a second hole 408b outside thereof, may be disposed between the electrode assembly 400 and the bottom portion 501 of the battery case 500. The first insulating plate 408 also may act to electrically separate the bottom portion 501 of the battery case 500 and the electrode assembly 400 from each other.

The first insulating plate 408 may act to keep the positive electrode 402 of the electrode assembly 400 from making electrical contact with the bottom portion 501 of the battery case 500.

When a large amount of gas is generated due to degradation of the secondary battery 1000, the first hole 408a may act as a path for rapidly moving the gas up from the secondary battery 1000.

The second hole 408b may act as a path that allows the negative electrode tab 406 to be welded to the bottom portion 501 of the battery case 500.

The electrode assembly 400 may be further provided with a center pin in the form of a hollow cylindrical pipe (or tube) in the winding center. Large amounts of gas generated from degradation of the secondary battery 1000 may be easily emitted through a path inside the center pin.

In addition, a second insulating plate 409, which is joined to the battery case 500 and has a first hole 409a in the center thereof and a plurality of second holes 409b outside thereof, may be disposed between the electrode assembly 400 and a cap assembly 600.

The second insulating plate 409 may serve to keep the electrode assembly 400 from making electrical contact with the cap assembly 600.

The second insulating plate 409 may serve to keep the negative electrode 401 of the electrode assembly 400 from making electrical contact with the cap assembly 600.

When a large amount of gas is generated due to a failure in the secondary battery 1000, the first hole 409a may act as a path for rapidly moving the gas to the cap assembly 600.

The second hole 409b may act as a path that allows the positive electrode tab 407 to be welded to the cap assembly 600.

The other second holes 409b may act as paths allowing an electrolyte solution to rapidly fill the electrode assembly 400 during an electrolyte filling process.

The cap assembly 600 may include a cap-up 601 including a plurality of through-holes 601d, a safety plate 603 provided below the cap-up 601, a connection ring 605 provided below the safety plate 603, a first through-hole 606a connected to the connection ring 605, a cap-down 606 having a second through-hole 606b, a sub-plate affixed to a lower portion of the cap-down 606 and electrically connected to the positive electrode tab 407, and an insulating gasket 608. The insulating gasket 608 insulates the cap-up 601, the safety plate 603, the connection ring 605, and the cap-down 606 from a side portion 502 of the battery case 500.

The insulating gasket 608 may be compressed between a beading part 503 and a crimping part 504 formed on the side portion 502 of the battery case 500.

The through-hole 601d formed in the cap-up 601 and the through-hole 606b formed in the cap-down 606 may serve to emit internal gas to the outside when abnormal internal pressure occurs (e.g., builds up) inside the battery case 500.

As the safety plate 603 is inverted upward from an internal pressure and electrically disconnects from the sub-plate, the safety plate 603 comes apart, allowing the gas inside to escape to the outside.

A secondary battery may be a rectangular cell.

Referring to FIG. 14, the rectangular cell is similar to a cylindrical cell in that it includes a positive electrode 402, a negative electrode 401, and a separator disposed between the positive electrode 402 and the negative electrode 401, and the electrode assembly 400 is wound in a jelly-roll shape. However, the rectangular cell is differentiated from a cylindrical cell in that the cross-section of the electrode assembly takes a rectangular form, not a cylindrical form. However, the cross-section of the cell is not limited thereto, and may have any suitable shape, such as a triangular shape, a square shape, a pentagonal shape, or the like.

The secondary cell may be, for example, a lithium secondary battery.

The secondary battery has excellent lifetime characteristics and high-rate characteristics, and as such, may be utilized in an electric vehicle (EV) for example. For example, the lithium battery may be used in a hybrid vehicle, such as a plug-in hybrid electric vehicle (PHEV) and the like. Also, the lithium battery may be used in any field that requires a large amount of energy storage. For example, the lithium battery may be used in an electric bicycle, a power tool, and the like.

A plurality of secondary batteries may be stacked to form a battery module, and a plurality of battery modules may form a battery pack. Such a battery pack may be utilized in all types of devices in which high capacity and high output are desired. For example, such a battery pack may be used in a laptop computer, a smartphone, an electric vehicle, and the like. The battery module may include, for example, a plurality of batteries and a frame holding the batteries. The battery pack may include, for example, a plurality of battery modules, and a bus bar connecting the battery modules. The battery module and/or battery pack may further include a cooling device. A plurality of battery packs may be managed by a battery management system. The battery management system may include a battery pack and a battery control device connected to the battery pack.

The following Examples and Comparative Examples are provided to describe some of the embodiments in greater detail. However, it will be understood that the Examples are provided to illustrate some of the embodiments of the present disclosure and are not to be construed as limiting the scope of the present disclosure.

Example 1: Coin Cell, including positive electrode with a Z-shaped buffer portion.

A mixture containing positive electrode active material $LiNi_{0.91}Co_{0.05}Al_{0.04}O_2$, a carbon conducting agent (Denka Black), and polyvinylidene fluoride (PVdF) in a weight ratio of 92 : 4 : 4 was mixed with N-methylpyrrolidone (NMP) using agate mortar and pestle, to produce a slurry.

On one side of an aluminum current collector, the slurry was bar coated and dried at room temperature, and then once again dried at 120 °C under vacuum, to thereby prepare a first laminate with a positive electrode active material layer introduced therein.

Subsequently, on the other side of the aluminum current collector, a positive electrode active material layer was introduced following the same process, to prepare a second laminate. The prepared second laminate was rolled to prepare a positive electrode.

The prepared positive electrode included a coated portion coated with a positive electrode active material and an uncoated portion uncoated with a positive electrode active material.

As shown in FIG. 1, a buffer portion is formed by bending the uncoated portion once in a direction opposite to a length direction (e.g., x direction) of a positive electrode when viewed from the length direction, and then bending the uncoated portion in the length direction.

A positive electrode tab was disposed between the buffer portion and a terminal end of the uncoated portion. The positive electrode tab was disposed so as to be extended in a winding axis direction (e.g., y direction) of the electrode assembly.

As shown in FIG. 7, an insulating tape was attached to the surface of a positive electrode tab. The prepared positive electrode has a structure illustrated in FIG. 1.

A mixture of artificial graphite, a styrene-butadiene rubber (SBR) binder, and carboxymethyl cellulose (CMC) in a weight ratio of 98: 1: 1 was added to distilled water and stirred with a mechanical stirrer to prepare a negative electrode active material slurry.

The slurry was bar-coated on a copper current collector and dried at room temperature, and dried again under the conditions of vacuum and 120 °C, to thereby form a first laminate having a negative electrode active material layer introduced therein.

Subsequently, on the other side of the copper current collector, a negative electrode active material layer was introduced following the same process, to prepare a second laminate. The prepared second laminate was rolled to prepare a negative electrode.

The prepared negative electrode included a coated portion coated with a negative electrode active material and an uncoated portion uncoated with a negative electrode active material.

A negative electrode tab was disposed between the buffer portion and a terminal end of the uncoated portion. The negative electrode tab was disposed by welding so as to be extended in a winding axis direction (e.g., -y direction) of the electrode assembly.

As shown in FIG. 8, an insulating tape was attached to the surface of a negative electrode tab. The prepared negative electrode may have a structure as illustrated in FIG. 1.

After disposing a positive electrode, a polyethylene separator, a negative electrode and a separator as in FIG. 1, an electrode assembly rolled into a jelly-roll form from a winding start point (e.g., the left end in FIG. 1) to a winding end point (e.g., the right end in FIG. 1) was prepared.

The positive electrode was disposed on the outermost portion of the electrode assembly, and the buffer portion and the positive electrode tab were sequentially disposed along the winding direction outside the outermost portion. The electrode assembly had a structure as illustrated in FIG. 2 and FIG. 9.

A height (H1) of the wound electrode assembly was 5 mm, and an outside diameter (D1) of the wound electrode assembly was 10 mm. A width (W) of the buffer portion was about 0.8 mm.

An electrolyte solution was prepared by adding 1.5 M $LiPF_6$ as a lithium salt to a mixed solvent containing ethylene carbonate (EC), ethylmethyl carbonate (EMC), and dimethyl carbonate (DMC) in a volume ratio of 2:2:6.

An aluminum battery case and an aluminum cap assembly were prepared.

A lower insulating plate and an upper insulating plate were disposed at a lower portion and an upper portion of the wound electrode assembly, respectively. The lower insulating plate and upper insulating plate were each a polyphenylene sulfide insulating plate having a through-hole installed in the center thereof.

While having the negative electrode tab of the wound electrode assembly inserted between the battery case and the lower insulating plate, a lower portion of the battery case and the negative electrode tab were joined by laser welding.

The wound electrode assembly disposed between the lower insulating plate and the upper insulating plate was accommodated in the battery case.

The positive electrode tab of the wound electrode assembly was joined to a back side of the cap assembly by welding.

The cap assembly was disposed on an upper portion of the battery case, and an insulating packing was disposed between the battery case and the cap assembly. The insulating packing was a polypropylene gasket.

By bending an upper end portion of the battery case inwardly, the battery case and the cap assembly were joined together.

An electrolyte solution was injected through an injection port, and the injection port was sealed using a sealing body to thereby complete a coin cell.

The coin cell had a structure as illustrated in FIG. 10.

Example 2: Coin cell, including positive electrode embossed buffer portion.

A coin cell was prepared following the same process as Example 1, except that a positive electrode provided with a buffer portion having an embossed structure disclosed in FIG. 3 was used as a positive electrode, instead of the positive electrode disclosed in FIG. 1.

Example 3: Coin cell, including positive electrode with two Z-shaped buffer portions.

A coin cell was prepared following the same process as Example 1, except for the positive electrode. In this example, a positive electrode provided with buffer portions having a plurality of bent (e.g., folded) portions at both terminal ends thereof as shown in FIG. 4 was used instead of the positive electrode disclosed in FIG. 1.

Example 4: Coin cell, including negative electrode with a Z-shaped buffer portion.

A coin cell was prepared following the same process as Example 1, except for the negative electrode. In this example, a negative electrode provided with a buffer portion having a plurality of bent (e.g., folded) portions at an uncoated portion of the negative electrode as shown in FIG. 5 was used instead of the negative electrode disclosed in FIG. 1.

Example 5: Cylindrical cell, including positive electrode with a Z-shaped buffer portion.

A cylindrical cell was prepared following the same process as Example 1, except that the height of the rolled electrode assembly was changed to 40 mm and the outside diameter of the rolled electrode assembly was maintained at 10 mm.

A height (H2) of the wound electrode assembly was 40 mm, and an outside diameter (D2) of the wound electrode assembly was 10 mm. A width (W) of the buffer portion was about 0.8 mm.

The cylindrical cell had a structure as illustrated in FIG. 13 to FIG. 15.

Example 6: Cylindrical cell, including positive electrode embossed buffer portion.

A cylindrical cell was prepared following the same process as Example 5, except the structure of the buffer portion included in the positive electrode was changed from a Z-type buffer portion disclosed in FIG. 1 to an embossed structure disclosed in FIG. 3.

A height (H2) of the wound electrode assembly was 40 mm, and an outside diameter (D2) of the wound electrode assembly was 10 mm. A width (W) of the buffer portion was about 0.8 mm.

Comparative Example 1: Coin cell, free of buffer portion in positive electrode

A coin cell was prepared following the same process as Example 1, except that a positive electrode free of a buffer portion (i.e., without the buffer portion) as disclosed in FIG. 6 was used as a positive electrode, instead of the positive electrode disclosed in FIG. 1.

Comparative Example 2: Cylindrical cell, free of buffer portion in positive electrode.

A cylindrical cell was prepared following the same process as Example 5, except that the positive electrode was free of a buffer portion.

Evaluation Example 1: evaluation of stretchability.

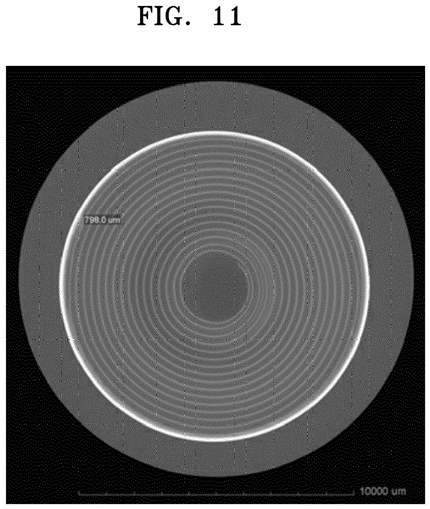

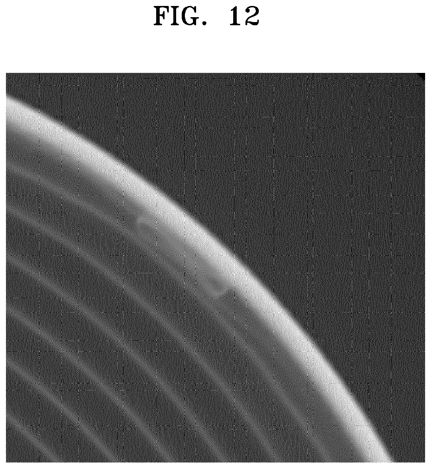

After charging the coin cell prepared in Example 1 to 100% SOC, the shape of the buffer portion was confirmed by X-ray, without dissembling the coin cell. The measurement results are shown in FIG. 11 and FIG. 12.

FIG. 11 shows an X-ray image of a cross-section of a coin cell secondary battery prepared in Example 1 after charging. FIG. 12 is a partial enlarged view of FIG. 11.

As shown in FIG. 11, it was confirmed that the shape of the bent portion remained as a Z-shape, having a plurality of bent (e.g., folded) portions, on the outside of the outermost portion of the coin cell. A width of the buffer portion was about 0.8 mm.

Evaluation Example 2: evaluation of room-temperature charge-discharge characteristics.

The coin cells prepared in Examples 1 to 6 and Comparative Examples 1 and 2 were charged at a constant current rate of 0.1 C at 25 °C until the cell voltage reached 4.2 V (vs. Li) and then in a constant voltage mode, were cut off at 4.3 V with 0.05 C rate. Subsequently, the battery was discharged at a constant current rate of 0.1 C until the battery voltage reached 2.8 V (vs. Li) during discharge (formation cycle).

The lithium battery after the formation cycle was charged at a constant current of 0.2 C at 25 °C until the battery voltage reached 4.2 V (vs. Li). Subsequently, the lithium batteries were discharged at a constant current rate of 0.2 C until the battery voltage reached 2.8 V (vs. Li) during discharging and this cycle was repeated under the same conditions up to the 100th cycle (i.e., for a 100 repetitions).

In all charge-discharge cycles, after each charge/discharge cycle, a rest period of 10 minutes was provided. Part of room-temperature charge-discharge test results is shown in Table 1 below. Capacity retention rate at the 100th cycle is defined by Equation 1 below.

Equation 1:

$$\text{Capacity retention rate [\%]} = [\text{Discharge capacity at 100th cycle / Discharge capacity at 1st cycle}] \times 100$$

[Table 11

|  | Capacity retention rate [%] |
| --- | --- |
| Example 1: Coin Cell, including positive electrode with a Z-shaped buffer portion | 80 |
| Example 2: Coin Cell, including positive electrode with embossed buffer portion | 85 |
| Example 3: Coin Cell, including positive electrode with two Z-shaped buffer portions | 80 |
| Example 4: Coin Cell, including negative electrode with a Z-shaped buffer portion | 85 |
| Example 5: Cylindrical Cell, including positive electrode with a Z-shaped buffer portion | 80 |
| Example 6: Cylindrical Cell, including positive electrode with embossed buffer portion | 85 |
| Comparative Example 1: Coin cell, free of buffer portion in positive electrode | 20 |
| Comparative Example 2: Cylindrical Cell, free of buffer portion in positive electrode | 20 |

As shown in Table 1, the lithium batteries of Examples 1 to 6 have improved room-temperature characteristics compared to that of the lithium batteries of Comparative Examples 1 to 2.

The coin cells of Examples 1 to 4 and cylindrical cells of Examples 5 and 6 have shown improved lifetime characteristics (e.g., increased lifetime), as the buffer portion accommodated volume changes of the electrode assembly during charging/discharging and thus prevented degradations of electrode tabs.

The coin cell of Comparative Example 1 and the cylindrical cell of Comparative Example 2 have shown a significant decrease in lifetime characteristics as the electrode tabs have degraded remarkably due to volume changes of electrode assembly.

According to some aspects, by having the buffer layer disposed on an outermost portion of the electrode assembly, volume changes of the electrode assembly can be accommodated during charging/discharging, and thus, a secondary battery including the electrode assembly may have improved (e.g., increased) structural stability (e.g., structural integrity).

It should be understood that embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims and equivalents thereof.

**Claims**

1. An electrode assembly comprising:

   a first electrode, a second electrode, and a separator between the first electrode and the second electrode, the first electrode, the separator, and the second electrode being wound in a jelly-roll shape; and
   a first electrode tab,
   wherein the first electrode comprises a first coated portion coated with a first electrode active material on a first substrate, and a first uncoated portion on the first substrate, on one side of the first coated portion, and free of the first electrode active material,
   wherein the first electrode tab is on the first uncoated portion of the first electrode, and
   wherein the first electrode further comprises a first buffer portion at an outermost region of the electrode assembly and extendible along at least one of a winding direction of the electrode assembly and an opposite direction thereof.

2. The electrode assembly of claim 1, wherein the first buffer portion is in the first uncoated portion.

3. The electrode assembly of claim 1 or claim 2, wherein the first buffer portion comprises a plurality of bent portions and at least one of the plurality of bent portions is bent in an opposite direction to the winding direction of the electrode assembly.

4. The electrode assembly of any one of claims 1 to 3, wherein the first buffer portion comprises a first bent portion bent in an opposite direction to the winding direction of the electrode assembly, and a second bent portion bent in the winding direction of the electrode assembly, optionally wherein:
   each of the first bent portion and the second bent portion has a radius of curvature of 100 $\mu$m or less.

5. The electrode assembly of any one of claims 1 to 4, wherein a width of the first buffer portion is a distance between both terminal ends of the plurality of bent portions of the first buffer portion, and
   wherein the width of the first buffer portion is about 1 % to about 40 % relative to an outermost circumference of the electrode assembly.

6. The electrode assembly of any one of claims 1 to 5, wherein the first buffer portion has a width of 5 mm or less.

7. The electrode assembly of any one of claims 1 to 6, wherein the first buffer portion has a Z shape or an S shape.

8. The electrode assembly of claim 1 or claim 2, wherein the first buffer portion has an embossed structure.

9. The electrode assembly of any one of claims 1 to 8, wherein the first buffer portion is between the first electrode tab and the first coated portion.

10. The electrode assembly of any one of claims 1 to 9, wherein the first electrode tab is adjacent to a terminal end portion of the first uncoated portion, and
    wherein the first electrode tab is extending in a direction different from a winding direction of the first electrode, optionally wherein:

    the first electrode tab extends in a direction perpendicular to the winding direction of the first electrode.

11. The electrode assembly of any one of claims 1 to 10, wherein the first electrode tab does not have a buffer portion extended in at least one of a direction in which the first electrode tab is extended, or an opposite direction thereof.

12. The electrode assembly of any one of claims 1 to 11, wherein:

    (i) a terminal end of the first uncoated portion is exposed on an outermost portion of the electrode assembly; and/or
    (ii) a ratio (D1/H1) of an outside diameter (D1) to a height (H1) of the electrode assembly is about 1 to about 25.

13. The electrode assembly of any one of claims 1 to 12, wherein the first electrode comprises a winding start portion, and a second buffer portion at the winding start portion and extendable along at least one of the winding direction of the electrode assembly and an opposite direction thereof, optionally wherein:

    the first electrode further comprises a second uncoated portion on the first substrate, on an other side of the first coated portion, and free of the first electrode active material, and
    wherein the second uncoated portion comprises the second buffer portion.

14. A secondary battery comprising:

    an electrode assembly according to any one of claims 1 to 13;
    a battery case comprising an inner space and accommodating the electrode assembly and an electrolyte in the inner space; and
    a cap assembly joined to an upper portion of the battery case and sealing the battery case.

15. The secondary battery of claim 14, wherein

    (i) the electrode assembly comprises an electrode tab, and
    the electrode tab is fixed to the battery case or the cap assembly; and/or
    (ii) the secondary battery is a coin cell, a cylindrical cell, or a rectangular cell.

# FIG. 1

# FIG. 2

FIG. 3

# FIG. 4

# FIG. 5

FIG. 6

FIG. 7

110

114

118

111

# FIG. 8

# FIG. 9

FIG. 10

FIG. 11

FIG. 12

# FIG. 13

# FIG. 14

601

601d

603

605

606a

606b

606

608

409b

409a

409

1000

407

H2

D2

400

406

408b

408a

408

500

# FIG. 15

Europäisches
Patentamt
European
Patent Office
Office européen
des brevets

# EUROPEAN SEARCH REPORT

**Application Number**

EP 23 15 9194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 635 774 A (HUNAN LIFANG NEW ENERGY SCIENCE & TECH CO LTD) 9 April 2021 (2021-04-09) | 1-12,14, 15 | INV. H01M4/70 H01M10/0587 H01M10/04 |
| A | * paragraphs [0010] - [0016], [0029] - [0030], [0044] - [0049]; figures 1-4 * | 13 | |

TECHNICAL FIELDS
SEARCHED (IPC)

H01M

The present search report has been drawn up for all claims

| Place of search | Date of completion of the search | Examiner |
|---|---|---|
| Munich | 13 July 2023 | Spingler, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 9194

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2023

| Patent document cited in search report | Publication date | Patent family member(s) | Publication date |
|---|---|---|---|
| CN 112635774 A | 09-04-2021 | NONE | |

EPO FORM P0459